# EUROPEAN PATENT APPLICATION

(11) **EP 0 776 784 A1**
(43) Date of publication of application: **04.06.1997**
(21) Application number: 96203282.7
(22) Date of filing: 22.11.1996
(51) Int. Cl.: B60N 2/28

(54) **A safety infant seat**

(30) Priority: 01.12.1995 NL 1001802
(71) Applicant: B.V. MACHINE- EN METAALWARENFABRIEK DREMEFA, 6983 BM Doesburg (NL)
(72) Inventor: Drexler, Johannes Herman, 7004 AE Doesburg (NL)
(74) Representative: Boelsma, Gerben Harm, Ir.

(57) **Abstract**

The invention relates to a safety infant seat, comprising a bucket seat body with a substantially U-shaped carrying handle that is pivotally mounted to the side walls of the seat body about a transverse axis, and with attachment points for a safety belt. According to the invention the attachment points for the safety belt are provided on the legs of the U-shaped carrying handle.

## Description

The invention relates to an infant safety seat, comprising a bucket seat body with a substantially U-shaped carrying handle that is pivotally mounted to the side walls of the seat body about a transverse axis and is adapted to be swung and locked from a vertical position for carrying into an obliquely forwardly directed position, attachment points being provided for a safety belt.

Such an infant safety seat is disclosed in NL-A-9400114 and is designed for use in various situations. In addition to the use as an infant carrier and as a rocker seat respectively this seat is, with its carrying handle swung in a forwardly directed position, adapted for placement on a passenger's seat in an automobile. In the latter case the bucket seat becomes with its front end directed to the backrest of the passenger's seat and with the obliquely forwardly directed carrying handle supporting against the backrest of the respective passenger's seat.

With the well-known infant seat the attachment points for the threepoints-safety belt associated with the respective passenger's seat comprise two attachment points on the backside of the backrest portion of the seat body and an attachment point on each of the two arm rest portions of the seat body. To secure the infant seat on the passenger's seat the hip belt portion and the shoulder belt portion of the threepoints-safety belt are passed along the attachment points on the backrest portion and those on the armrest portions of the bucket seat body respectively.

From a viewpoint of safety the well-known infant seat amply satisfies the requirements. In all of the circumstances that may occur in practice the threepoints-safety belt and the additional support through the obliquely forwardly directed carrying handle hold the infant seat firmly in place on the passenger's seat. In practice, however, the act of passing the hip belt portion and the shoulder belt portion of the three points safety belt along the various attachment points on the bucket seat body is experienced as rather inconvenient, whereas the available belt length is unsufficient in some automobile types.

The invention aims at overcoming this drawback of the well-known infant safety seat, without affecting the safety aspect.

According to the invention this aim is achieved in a simple and effective manner by providing the attachment points for the safety belt on the legs of the U-shaped carrying handle.

This permits the hip belt portion that extends from one of the two lower belt anchoring points to be passed over the attachment points on the obliquely forwardly directed carrying handle and towards the other of said two belt-anchoring points where the belt is closed by inserting the usual side buckle. Furthermore the shoulder belt portion may from the latter location passed directly, through the adjacent attachment point on the carrying handle if desired, and obliquely to the third safety belt anchoring point (positioned above shoulder level).

Thus the shoulder belt portion needs not to be passed around the backrest portion of the seat. This saves quite a length portion of the safety belt, that substantially exceeds the additional hip belt length required to permit the hip belt portion to be passed over the carrying handle instead of across the armrests of the seat.

Tests have shown, that also in this manner the infant seat may be stably secured on the passenger's seat.

The attachment points to be formed onto the legs of the carrying handle may be designed in the usual way, i.e. in the shape of a relatively flat eyelet, provided with a lateral insert slit for the belt.

To increase stability of the carrying handle in its obliquely upwardly directed position and to releave the locking mechanism within the pivot of the carrying handle, a further feature of the invention provides for a limiting stop on the side wall of the seat within the path of the swinging movement of the legs of the carrying handle.

The invention will be hereinafter further explained by way of example with reference to the drawing.
Fig. 1 shows a perspective view of a safety infant seat according to the invention;
fig. 2 shows the seat of fig. 1, secured by a usual threepoints-safety belt on the rear seat of an automobile and
fig. 3 is a perspective view on an enlarged scale of a portion of the carrying handle and the adjacent side wall portion of the seat according to the invention.

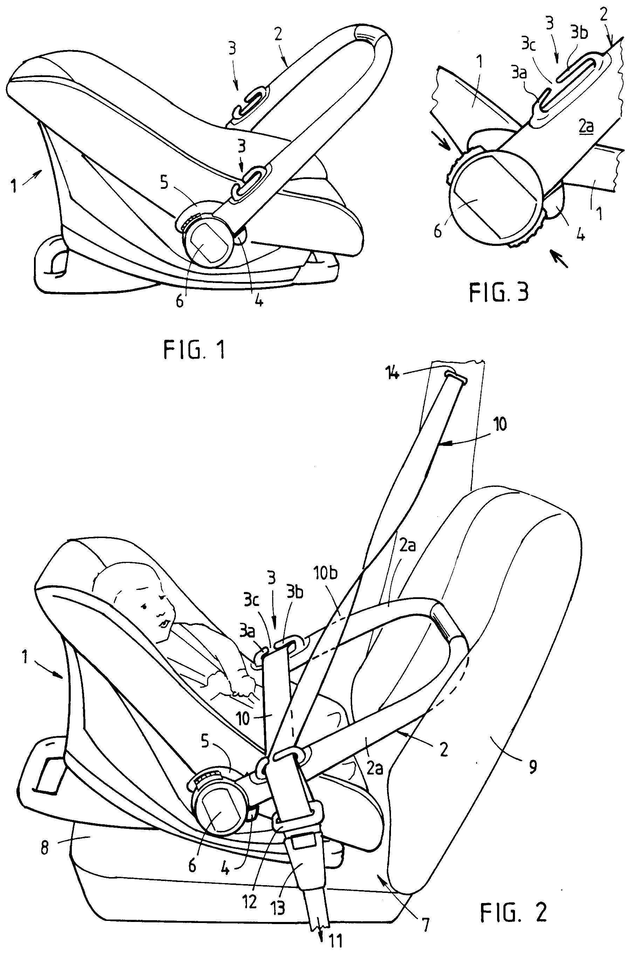

The safety infant seat 1 shown in fig. 1 substantially correspond with that according to the patent application above referred to, so that it needs not to be described in detail. Essential differences over the well-known embodiment according to said patent application are, that the attachment points on the rear side of the backrest portion and on the two armrests have been omitted. Instead the invention provided for an attachment point 3 formed on each of the two legs 2a of the carrying handle 2. A further difference over the well-known seat is, that the carrying handle 2 abuts a fixed limiting stop 4 (see in particular fig. 3) when it is swung from the vertical carrying position into the obliquely forwardly directed position (fig. 1 and 2). Preferably such a limiting stop 4 is provided on both sides of the seat, within the path of the swinging movement of each of the two legs 2a of the carrying handle. In the example shown the stop 4 is integrally formed with a ring segment 5 moulded to the respective side wall of the seat. The carrying handle 2 may be locked in the position shown in the drawing in a well-known manner by means of the locking mechanism that is provided within the pivot connection 6 between the seat and the two leg ends of the carrying handle.

In the example shown the attachment points 3 according to the invention are formed in the usual manner by projections 3a, 3b, that are integrally formed onto the upper side of the legs 2a of the carrying handle 2 and have their ends bent towards one another to obtain a flat eyelet provided with a slit 3c for laterally inserting a safety belt (see fig. 3).

Fig. 2 shows the infant seat on the seat 8 of a passenger's seat 7 belonging to the interior of an automobile, with the obliquely forwardly directed carrying handle abutting the backrest 9 of the passenger's seat.

The seat 1 is held on the passenger's seat 7 by means of the threepoints-safety belt 10. The hip belt portion 10a of the latter safety belt is anchored in a fixed point (not-shown) positioned on a low level in the background and extends from there via the attachment points or guiding eyelets 3 on the obliquely positioned carrying handle 2 towards the second low level anchoring point 11 in the foreground, that also forms the closing point for the safety belt, where the usual slide buckle 12 is inserted in a corresponding lock 13.

The shoulder belt portion 10b returning from the slide buckle 12 is then passed, via the adjacent attachment point 3 (where the belt is passed through the respective guiding eyelet for the second time) directly and obliquely towards the third anchoring point 14 of the safety belt that is positioned at a higher level.

## Claims

1. A safety infant seat, comprising a bucket seat body with a substantially U-shaped carrying handle that is pivotally mounted to the side walls of the seat body about a transverse axis and is adapted to be swung and locked from a vertical position for carrying into an obliquely forwardly directed position, attachment points being provided for a safety belt, characterized in that the attachment points for the safety belt are provided on the legs of the U-shaped carrying handle.

2. A safety infant seat according to claim 1, characterized in that a limiting stop is provided on the side wall of the seat and positioned within the path of the swinging movement of the legs of the carrying handle.

3. A safety infant seat according to claims 1-2, placed back to front wise on a passenger's seat in a vehicle, with its carrying handle locked in an obliquely forwardly directed position and abutting the backrest of the passenger's seat, while being secured in place by means of a theepoints-safety belt comprising a hip portion extending between two low level points and a shoulder portion extending between a high level point and one of the two low level points, characterized in that said hip portion is passed over the attachment points on both legs of the carrying handle, while said shoulder portion is passed from the respective low level point over the attachment point(s) on the adjacent leg of the carrying handle and from the latter attachment point(s) to said high level point.
